# FASCICULE DE BREVET EUROPEEN

(11) **EP 2 841 195 B1**
(45) Date de publication et mention de la délivrance du brevet: **17.11.2021**
(21) Numéro de dépôt: 13734341.4
(22) Date de dépôt: 26.04.2013
(51) Int. Cl.: B01J 19/08, C10G 2/00

(54) **PROCEDE ET REACTEUR GTL A PHASE MOBILE ET PLASMA**
GTL-VERFAHREN UND REAKTOR MIT EINER MOBILEN PHASE UND PLASMA
GTL PROCESS AND REACTOR EMPLOYING A MOBILE PHASE AND PLASMA

(30) Priorité: 27.04.2012 FR 1201232
(43) Date de publication de la demande: 04.03.2015
(73) Titulaire: Ugolin, Nicolas Gilbert, 75002 Paris (FR)
(72) Inventeur: Ugolin, Nicolas Gilbert, 75002 Paris (FR)
(74) Mandataire: Gevers & Orès
(86) Numéro de dépôt international: PCT/EP2013/058799
(87) Numéro de publication internationale: WO 2013/160467

(56) Documents cités:
- WO-A1-98/30524
- FR-A1- 2 923 731
- FR-A1- 2 945 033
- None

## Description

### Introduction

L'épuisement des ressources pétrolières et la pollution en dioxyde de carbone (CO2) que génère la combustion de produits pétroliers fossiles (une des principales causes du réchauffement climatique), impliquent le développement de procédés de production de pétrole non fossile plus respectueux de l'environnement, appelé biocarburant deuxième génération.

En effet, les besoins énergétiques liés aux transports qui nécessitent le stockage et le transport de l'énergie par le véhicule lui-même, et les alternatives proposées pour cette problématique restent peu satisfaisants surtout pour le transport aérien, impliquant le développement de carburants non polluants. En effet, ce type de carburant représente une des solutions plus adaptées et les mieux maîtrisées.

Or, la synthèse de Fischer_Tropsch «FT» permet de produire à partir de gaz de synthèse CO/H2 différents hydrocarbures paraffines et oléfines (en plus de l'eau et de l'alcool) qui peuvent être directement utilisés dans les véhicules à combustion existant. Ces produits sont respectueux de l'environnement pour peu que le gaz de synthèse soit produit à partir d'ordures ménagères ou de biomasse en utilisant des énergies renouvelables. En effet, à condition qu'il soit produit à partir de carbone recyclable, le produit issu de FT qui ne contient pas de composés aromatiques, ni de soufre, présente un bilan carbone très faible à l'utilisation.

Malheureusement la réaction FT, qui s'inscrit dans les technologies « GTL » Gas-to-Liquid, est complexe et une proportion variant de 50 à 20 % du carbone provenant du monoxyde de carbone est perdue sous forme de CO2 ou de méthane dans les réactions catalytiques telles qu'elles sont développées actuellement. Même si ce carbone n'est pas fossile, il diminue les performances écologiques des carburants produits et diminue également le rendement économique. D'autre part, l'apport d'un mélange de syngaz CO/H2 de proportion constante tel qu'il est réalisé en les procédés actuels, génèrent des pertes de rendement dans l'élongation des chaînes carbonées en raison des différences de diffusion du CO et du H2 au niveau des sites catalytiques et de la modification de ces diffusions avec l'avancée de la réaction. Nous proposons un procédé et un dispositif qui permet d'activer les entités réactionnelles et de moduler les apports que ce soit en quantité ou en proportion des différents éléments intervenant dans la réaction FT. De plus, la nouvelle géométrie de notre dispositif facilite le chargement et le déchargement des catalyseurs dans le réacteur et la séparation des produits et des catalyseurs par rapport aux structures généralement utilisées pour les réacteurs FT. FR-A-2 945 033 et FR-A-2 923 731 décrivent des procédés de gazéification de biomasses.

### Principe de fonctionnement

Le procédé consiste à activer les gaz de synthèse tels que du dihydrogène, du monoxyde de carbone et/ou leur mélange en un plasma, puis à soumettre aux gaz activés successivement à intervalles réguliers une phase particulaire, éventuellement catalytique. Chaque gaz de synthèse éventuellement activé par exemple le monoxyde de carbone , dihydrogène... est appliqué alternativement sur la phase particulaire. Dans certaines variantes, le mélange de gaz de synthèse, tels que monoxyde de carbone , dihydrogène, avec des proportions variables de chaque gaz, éventuellement complété par un ou plusieurs gaz additifs plasmogènes tels que argon, hélium , azote, CO2, est appliqué alternativement sur la phase particulaire. Le procédé selon l'invention est selon la revendication 1. Le dispositif selon l'invention est selon la revendication 7.

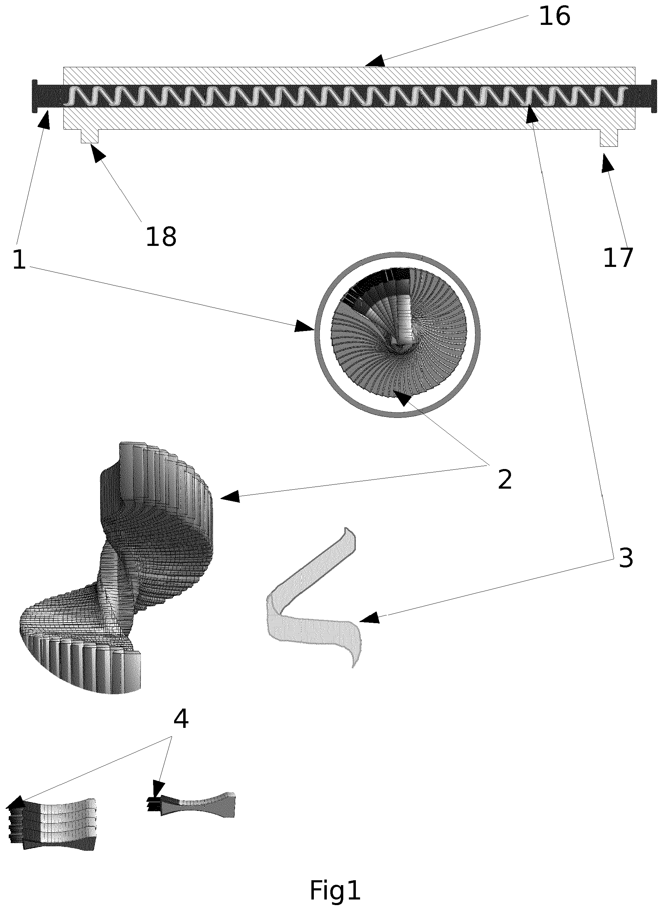

L'application alternative des gaz activés sur les particules et donc l'action alternative des gaz sur les particules permettant de contrôler la croissance de la synthèse, est préférentiellement obtenue en faisant circuler dans un tube réacteur Fig1-1 de diamètre quelconque, mais de préférence compris entre 1 centimètre et 20 centimètres une phase de particules constituée de particules catalytiques ou non. La phase particulaire, avec des tailles de particules comprises entre 5 nanomètres et cinq centimètres, est soumise à intervalles réguliers, à un plasma provenant d'un gaz. Le gaz utilisé pour générer le plasma peut être : -de l'hydrogène, permettant ainsi l'activation de ce dernier afin de l'hydrogéner, le monoxyde de carbone et/ou de la surface particulaire. -du monoxyde, le carbone permettant l'activation du monoxyde de carbone pour l'élongation des chaînes carbonées, ou encore un mélange de ces deux gaz.

Les éléments activés réagissent entre eux et/ou avec les particules catalytiques pour produire les composés d'une réaction FT, c'est-à-dire majoritairement des oléfines, des paraffines, des alcools et de l'eau. Dans certains modes de réalisation, des gaz supplémentaires peuvent être ajoutés au gaz utilisé pour réaliser le plasma, tel que sans être exhaustif hélium, argons ou azote afin d'améliorer la formation du plasma.
A) Dans un mode de réalisation particulier, le moyen utilisé pour faire avancer la phase particulaire dans le tube du réacteur est un système d'hélice ou de vis-sans-fin Fig1-2,3 incluse dans le tube réacteur. La vis-sans-fin comprendra un racloir souple ou un système de balais métalliques Fig1-4 permettant d'éviter l'adhérence des particules et des matières sur les parois du tube réacteur. La vis-sans-fin pourra être en tout type de matériau résistant à de hautes températures typiquement 600 à 1000°C tel que sans être exhaustif, céramique, métal, polymère thermorésistant etc. Dans certains modes de réalisation, l'hélice ou la vis-sans-fin sera constituée de fer ou d'alliage de fer notamment les aciers et particulièrement des alliages à base de cobalt ou nickel. En effet, le cobalt et le fer sont deux catalyseurs pour les réactions Fischer-Tropsch « FT ».
B) Dans certains modes de réalisation, les particules utilisées peuvent être sans être exhaustif des particules de fer, des particules de carbure de silicium recouvertes ou intégrant du cobalt, des particules de fer recouvertes ou intégrant du cobalt, des particules de diamant creuses ou non, des nanoparticules de diamant creuses ou non, des particules ou nanoparticules de diamant recouvertes ou intégrant du cobalt, des particules de diamant recouvertes ou intégrant du fer, des particules de carbure de silicium comprenant des particules de diamant, des particules de cuivre comprenant un mélange quelconque des éléments précités.

B-1) Dans un mode de réalisation particulier, les particules sont constituées d'un cœur en céramique tel que le carbure de silicium, des céramiques, d'aluminium ou d'oxydes tels que les oxydes de silicium, d'aluminium, de titane, de zirconium, de magnésium, de silicium magnésium, de gallium, de césium ou encore de particules de carbone ou de tamis zéolithes etc. Dans un mode de réalisation préférentiel, le cœur est constitué d'une éponge en carbure de silicium comprenant des nanoparticules de diamant.

B-2) Dans certains modes de réalisation, les cœurs ou les particules sont recouverts par un catalyseur ionique et/ou d'oxyde métallique constitué par un mélange quelconque d'ions ou d'oxydes comprenant sans être exhaustif des ions ou des oxydes de fer (ferrique , ferreux), de cuivre (cuivrique ou cuivreux), de cérium, de potassium, lanthane, cobalt, calcium, zinc, aluminium, fluor, magnésium , manganèse, nickel, ruthénium, rubidium, des métaux de groupe I (alcalins, Li, Na, Rb, Cs, Fr) ou du groupe II (alcalins terreux Be, Mg, Ca, Sr, Ba, Ra), etc.

B-3) Dans certains modes de réalisation, les particules sont remplacées ou additionnées par des plastiques ou autres polymères de matières plastiques broyées. De préférence ces plastiques sont broyés avec une granulométrie inférieure à 5 millimètres. Ces polymères ou plastiques peuvent être recouverts de catalyseur ionique et/ou d'oxyde métallique.

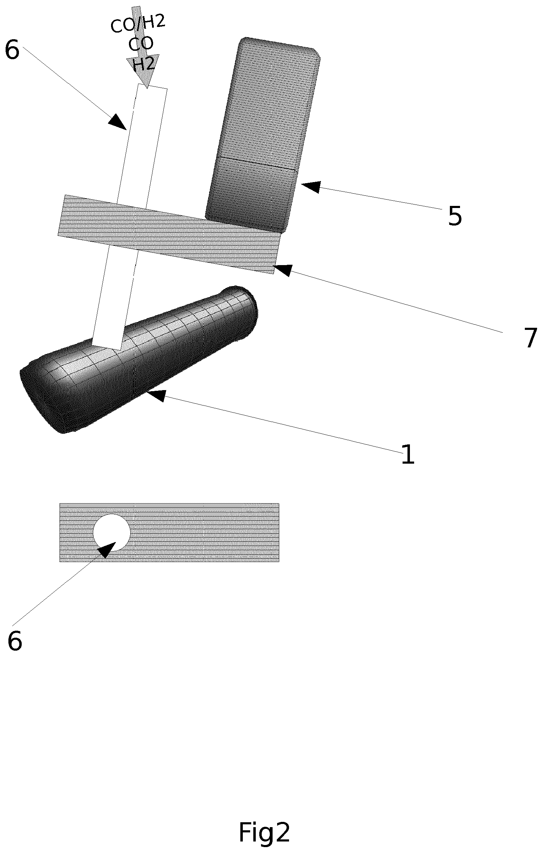

C) Dans un mode de réalisation particulier, les plasmas de gaz activés sont induit par des micro-ondes (plasmas d'origine micro-ondes) et plus particulièrement des micro-ondes générées par des magnétrons 5. Dans un mode de réalisation encore plus particulier, le plasma sera généré par un système comprenant un tube transparent pour les micro-ondes tel que le quartz 6. Le tube aura un diamètre D de préférence égal à λ/4 ou λ/2, où L représente la longueur d'onde des micro-ondes utilisées soit L/4 égal à de préférence 6 centimètres environ pour 2,45 GHZ. Le tube transparent sera disposé au travers du guide d'ondes d'un magnétron de préférence tel que l'axe principal du tube soit au centre du guide d'ondes Fig2 7 et que les parois du guide d'ondes soient de préférence à une distance λ/4 ou λ/2 du centre du cylindre. Les micro-ondes en se propageant dans le guide d'ondes, avec une direction globale perpendiculaire à l'axe du tube de quartz, traversent la paroi transparente du tube et interagissent avec le gaz circulant dans le tube de quartz selon son axe, globalement perpendiculairement à la propagation des micro-ondes. En traversant les micro-ondes, le gaz est ionisé et forme un plasma.

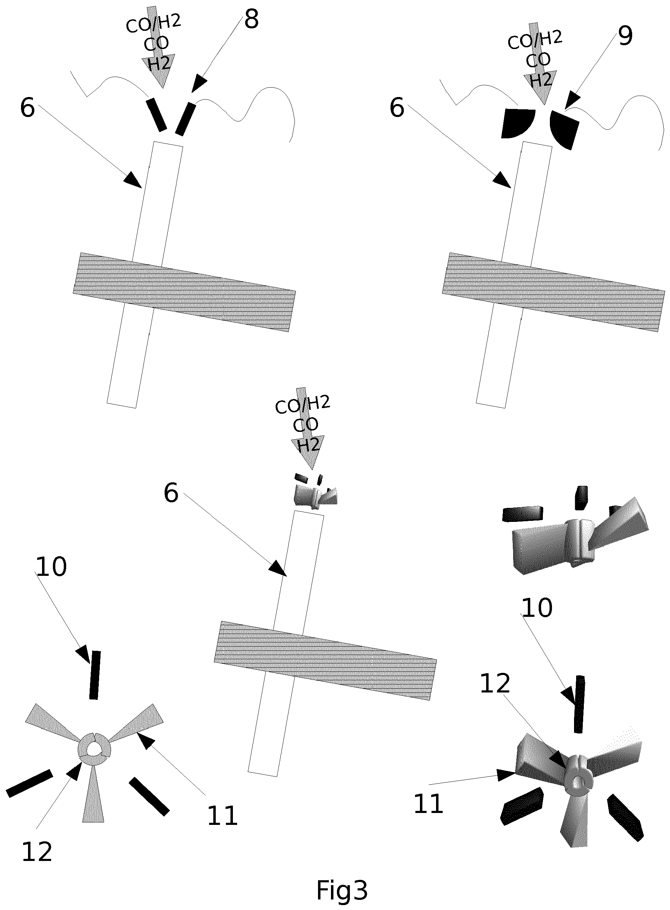

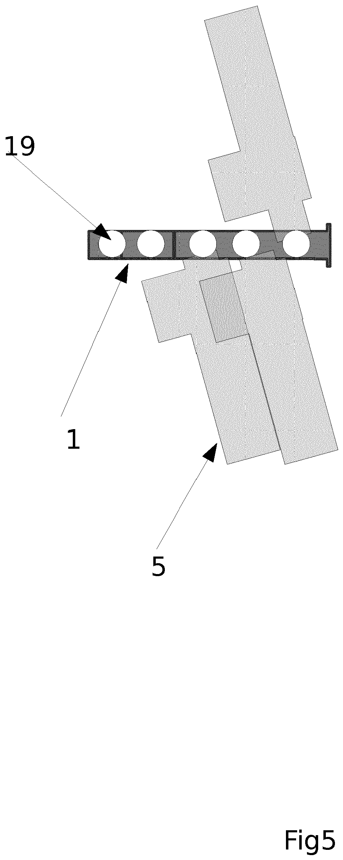

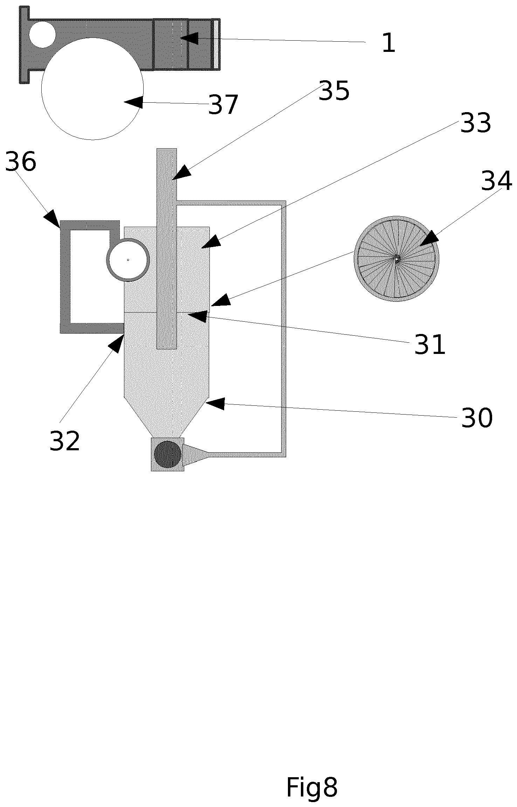

D) Dans un certain mode de réalisation, deux électrodes sous tension Fig3-8 sont disposées à l'entrée du cylindre transparent, permettant de réaliser un arc électrique capable d'initier un gaz activé sous forme de plasma (d'origine électrique). Dans un mode de réalisation encore plus particulier, les électrodes sont divergentes Fig3-9, étirant l'arc électrique qui glisse le long des électrodes sous l'action du gaz qui circule dans le tube et forme un plasma d'origine arcs électriques hors équilibre. En effet, en circulant dans le tube, le gaz souffle les arcs électriques qui se forment entre les deux électrodes.

Dans un mode de réalisation encore plus particulier, les électrodes à l'entrée du tube transparent sont remplacées par un tripode de trois électrodes disposées à 120° les unes des autres Fig3-10, les trois électrodes étant portées à un même potentiel. En vis-à-vis du tripode est disposée une hélice à trois pales 11, telles que chaque pale constitue une électrode reliée à une des bornes 12 d'un connecteur tournant constituant l'axe de rotation de l'hélice. Trois tampons conducteurs relient le connecteur tournant (charbon ou tout autre matière conductrice) permettant de porter les pales de l'hélice à un même potentiel tel que soit instauré une différence de potentiel de plusieurs centaines ou plusieurs milliers de volts entre les pales de l'hélice et les électrodes du tripode. La différence de potentiel entre les électrodes du tripode et les électrodes de l'hélice permet la formation d'un arc électrique instable entre les électrodes du tripode et celles de l'hélice. En effet, sous l'action du gaz l'hélice tourne, lorsqu'une hélice est en vis-à-vis d'une électrode du tripode, un arc électrique se forme entre l'hélice et l'électrode du tripode. L'arc sera étiré avec le mouvement de l'hélice formant un arc hors équilibre initiant un plasma dans le gaz qui sera amplifié sous l'action des micro-ondes.

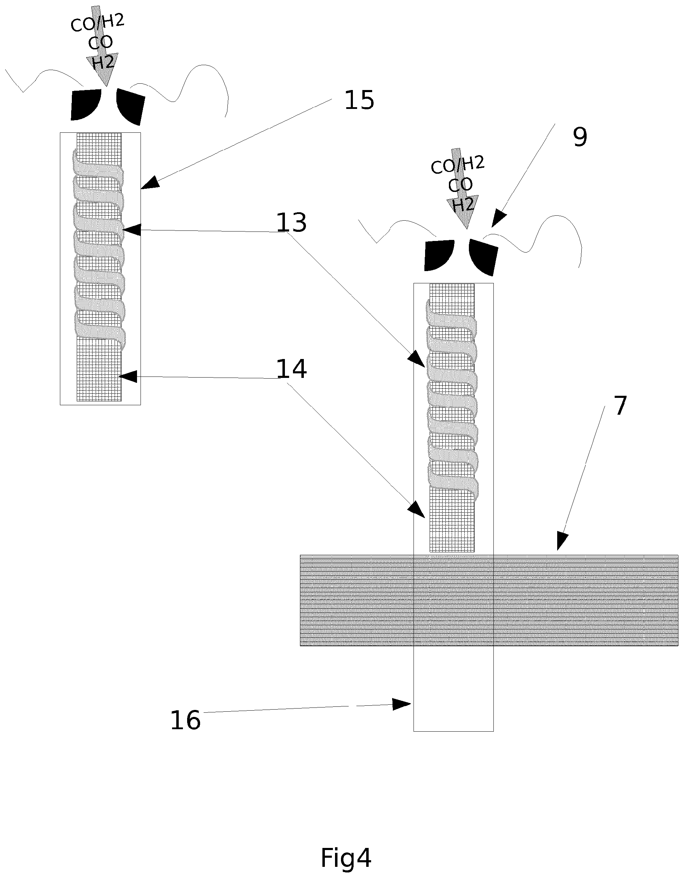

E) Dans une autre configuration, le plasma sera d'origine inductif, généré par un solénoïde 13 entourant le tube en quartz ou en carbure de silicium ou tout autre céramique ou matériau perméable aux champs électro-magnétiques 14 dans lequel circule le gaz qui doit
générer le plasma. Dans un mode de réalisation particulier, le solénoïde comprendra 7 tours. Le solénoïde est parcouru par un courant alternatif haute fréquence par exemple 800 mégaHertz, entraînant par induction la formation du plasma dans le gaz traversant le tube de quartz. Le tube de quartz et le solénoïde sont inclus dans un autre tube extérieur 15 obligeant une partie du gaz à circuler au travers du solénoïde permettant ainsi son refroidissement. Les systèmes d'amorçage du plasma sont les mêmes que ceux décrits pour les plasmas à micro-ondes décrits au chapitre D.
F) Dans une configuration particulière, le tube extérieur 15 décrit au chapitre E est le même que le tube transparent de 1 à 50 centimètres de diamètre mais de préférence 6 centimètres de diamètre décrit au chapitre C Fig4-16 Fig3-6 tel que le solénoïde et le tube de quartz sont inclus dans le tube transparent aux micro-ondes en amont du guide d'onde dans le sens de circulation du gaz. Les systèmes d'initiation des plasmas seront les mêmes que ceux décrits en D et seront préférentiellement des systèmes à arc électrique hors équilibre de manière à former un plasma possédant la triple nature hors équilibre, induction et micro-ondes. Plus généralement le procédé permet la formation d'un plasma dont l'origine provient d'une combinaison quelconque micro-ondes, inductifs, arcs électriques, arcs électriques hors équilibre. Plus particulièrement dans certains modes de réalisation, le dispositif permet la génération de plasmas inductifs et micro-ondes combinés.
G) Dans une configuration particulière, le réacteur comprendra un tube Fig1-1 en métal ou céramique tel que sans être exhaustif aciers, titane, alumine, carbure de silicium, nitrure, nickel, cuivre, tantale, niobium ,alliages de ces métaux, acier cobalt ou tout autre matériau approprié etc., d'une longueur quelconque, mais de préférence comprise entre 50 centimètres et 20 mètres et d'un diamètre quelconque, mais préférentiellement compris entre 3 et 20 centimètres. Préférentiellement il s'agira d'un alliage de fer pouvant inclure du nickel, du cobalt et éventuellement tout autre élément favorable à la catalyse (FT), à l'exception des poisons de la catalyse FT tel que soufre et ces dérivés etc. D'une manière générale, le tube peut être en un alliage quelconque de matériaux résistants à de hautes températures de préférence supérieures à 600°C.

Dans la partie catalytique du réacteur le tube de réacteur sera inclus dans un autre tube de diamètre plus grand Fig1-16 constituant un échangeur, dans lequel circule un fluide caloriporteur par exemple de l'eau ou du CO2 Fig1-17,18. Ce fluide en circulant permet de refroidir le réacteur et de maintenir la réaction FT exothermique se produisant dans le réacteur à des températures souhaitées préférentiellement comprises entre 100°C et 700°C. Le tube échangeur est éventuellement remplacé ou complété par des ailettes de radiateur soudées au tube et refroidies par air ou par eau ou par spray d'eau.

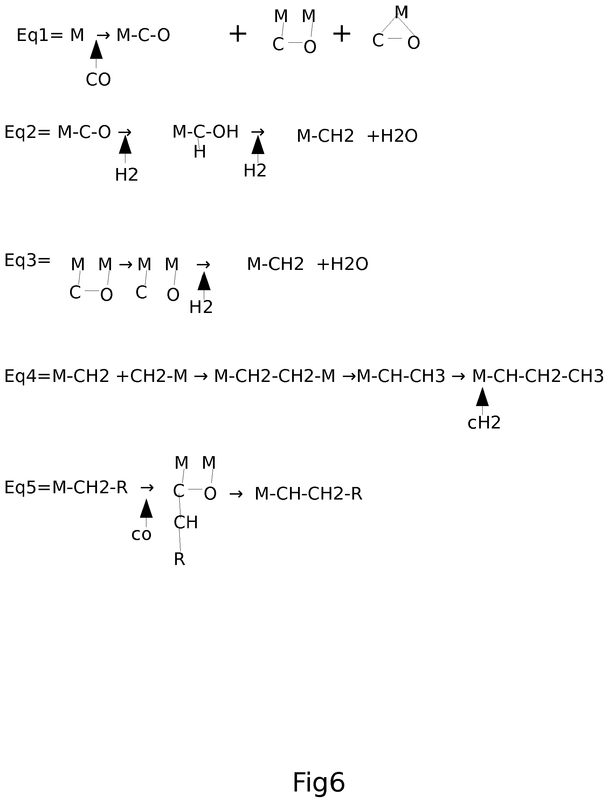

H) Le long du réacteur, sont disposé de manière régulière des entrées 19, pour les torches à plasma 15, 16, 6 continuées par le tube en quartz transparent. Par exemple tous les trois pas de l'hélice de convoyage une torche à plasma sera disposée. Les torches soufflent dans le réacteur le plasma de gaz comprenant les éléments constitutifs du gaz activé, sous forme d'ions, de radicaux libres et autres intermédiaire actifs. Les éléments du plasma réagissent avec les catalyseurs et/ou les particules, tel que les nano-diamants et ou les plastiques broyés, ou la phase du cœur des particules, réalisé sans être exhaustif, des réactions de type ou leur combinaison Fig6- Eq.1, Eq.2, Eq.3, Eq.4, Eq.5. Les torches à plasmas sont caractérisées en ce qu'elle n'injecte pas de micro onde à l'intérieur du réacteur.

Pour favoriser la croissance des hydrocarbures, les plasmas seront alternés entre des plasmas à base de monoxyde de carbone et des plasmas à base de dihydrogène.

Dans certains modes de réalisation, des plasmas mixtes de dihydrogène/monoxyde de carbone seront réalisés. Dans d'autres modes de réaction, seuls des plasmas dihydrogène ou seuls des plasmas monoxyde de carbone seront réalisés, le CO ou le H2 étant injecté dans l'entrée de torche suivante sous forme de gaz.

Typiquement dans la première torche est soufflé un plasma à base de CO puis dans la deuxième torche un plasma à base de H2 et ainsi de suite le long du réacteur. Par exemple 10 ou 100 couples de torches CO et H2 peuvent se succéder, sans limitation de nombre. Dans d'autres modes de réalisation, la succession entre des plasmas CO et H2 se fait dans la même torche.
I) Le réacteur sera isolé de l'atmosphère par un procédé de chargement et de déchargement des particules catalytiques et de déchargement des hydrocarbures et des autres composés formés gaz ou liquide.

I-1) A l'entrée du dispositif de chargement, seront par exemple disposés deux cylindres emboîtés tournant en sens inverse, le cylindre le plus intérieur 20 sera plein, et muni d'une cavité 21 percée en son fond par une série de pores 22 à l'opposé de l'ouverture de la cavité. Le cylindre extérieur incluant le cylindre intérieur sera muni d'une ouverture 23 de même taille que l'ouverture de la cavité du cylindre intérieur. Les deux cylindres seront inclus dans une chambre cylindrique23, munie de deux ouvertures 25 au-dessus et en-dessous de même dimension que les ouvertures des deux cylindres précédents, et de deux séries de pores opposées et disposées latéralement en position équatoriale 26. Chaque série de pores de la chambre cylindrique sera disposée sur un bosselage extérieur 26 permettant d'éviter l'occlusion des pores lors du croisement avec les pores disposés sur le cylindre intérieur durant la rotation des différents cylindres.

En position :

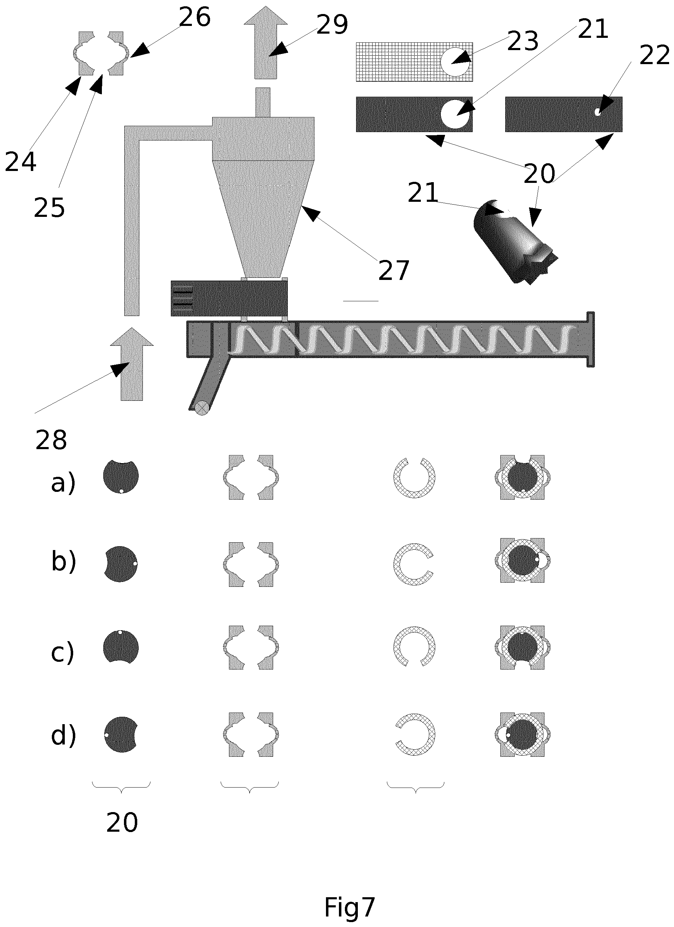

Fig7-a) les ouvertures des cylindres sont alignées vers le haut avec l'ouverture de la chambre cylindrique, et permet le remplissage de la cavité.
Fig7-b) en tournant en sens inverse par exemple ¼ de tour la cavité de cylindre intérieur est occultée par le cylindre extérieur alors que les pores du fond de la cavité sont positionnés en face de l'ouverture du cylindre extérieur en vis-à-vis du premier bosselage de la chambre cylindrique. Le premier bosselage est relié à une pompe à vide vidant l'atmosphère de la cavité (atmosphère extérieure).
Fig7-c) (en continuant les rotations en sens inverse par exemple ¼ de tour supplémentaire pour atteindre ½ tour, les deux ouvertures des cylindres intérieur et extérieur s'alignent sur l'ouverture basse de la chambre cylindrique, permettant au contenu de la cavité d'être déversé à l'intérieur du réacteur sans contamination de l'air extérieur, les pores du fond de la cavité étant occultés par le cylindre extérieur.
Fig7-d) en continuant la rotation par exemple ¼ de tour pour atteindre ¾, les pores du fond de la cavité s'alignent avec l'ouverture du cylindre extérieur en face du second bosselage lui-même relié à un second vide permettant de pomper l'atmosphère provenant du réacteur vers l'intérieur du réacteur. Puis un autre cycle recommence. Les vides sont réalisés par des pompes ou des Venturi pompant les atmosphères respectivement vers l'extérieur et vers l'intérieur du réacteur.

Dans un mode de réalisation particulier, la cavité haute de la chambre cylindrique est reliée à la sortie basse d'un cyclone de chargement 27.

I-2) Dans un mode de réalisation particulier, le dispositif de sortie des substrats et des particules catalytiques sera constitué par un système de cyclones. Dans une configuration particulière, le système de cyclones sera constitué d'un cyclone de charge 30 à double entrée longitudinale 31 pour les substrats et particules, et tangentielle 32 pour les gaz. Le réacteur1 débouche 37 dans une première chambre cylindrique de collection 33, dans laquelle tombent les substrats provenant des réactions FT et les particules catalytiques. Cette chambre de collection surplombe l'entrée longitudinale 31 d'un cyclone de charge conique. L'entrée longitudinale du cyclone de charge est constituée de pales inclinées 34 de manière à laisser passer les particules et les substrats liquides et solides, les orientant dans le sens de rotation du vortex qui sera induit par le cône du cyclone. Au travers de l'entrée longitudinale. Un tuyau 35 récupère les gaz remontant de la colonne centrale de gaz formés dans le cyclone de charge et les conduits au travers du réservoir vers d'autres unités de distillation pour être récupérés. Un piquage situé en fin du tuyau réacteur 36 récupère les gaz circulant dans le réacteur et les conduits à l'entrée tangentielle 32 du cyclone de charge. Sous l'action de ces gaz, un vortex descendant se formera dans le cyclone, entraînant les substrats et les particules vers la sortie inférieure du cyclone alors que les gaz remonteront dans une colonne centrale vers le tuyau de récupération. La sortie inférieure du cyclone de charge débouche dans l'entrée d'un dispositif similaire décrit en I-1. Cette sortie permettant d'évacuer les solides et liquides du réacteur sans contamination par l'air extérieur. À la partie haute du tuyau de récupération peut être installée une valve anti-retour. Les gaz sortant du tuyau de récupération pourront être distillés dans leurs différentes fractions.

J) Dans un mode de réalisation particulier, l'échangeur thermique du réacteur est interrompu avant la fin de celui-ci et est remplacé par un isolant, de ce fait cette partie du réacteur n'étant plus thermostatée, la température augmente à ce niveau du fait de la réaction FT. L'augmentation de température interrompt la réaction et entraîne la vaporisation des composés organiques synthétisés qui seront alors récupérés dans la phase gazeuse et pourront être distillés. Ne resteront éventuellement sur les particules catalytiques que certains composés tels que des goudrons qui seront évacués avec les particules catalytiques et craqués ultérieurement.

K) Dans certains modes de réalisation les particules catalytiques en sortie du réacteur seront transférées dans un four solaire tel que décrit ci-dessus, comprenant éventuellement :
- un tuyau métallique clos aux extrémités, par des moyens pour faire pénétrer et sortir les substrats et les particules catalytiques sans contamination atmosphérique extérieure et sans échappement des gaz intérieurs,
- des moyens pour concentrer la lumière solaire à la surface du four,
- des moyens optiquement transparents pour isoler thermiquement le four solaire du milieu extérieur, notamment par des systèmes de tuyaux transparents sous vide et/ou de confinement par flux gazeux,
- des moyens pour injecter des micro-ondes combinées éventuellement avec des infrarouges et des plasmas, à l'intérieur du four afin de les faire réagir avec les substrats par exemple pour les craquer, les évaporer ou pour régénérer les particules catalytiques,
- des moyens pour injecter des gaz notamment du CO2, CO ou de 02 ou des plasmas gazeux de ces gaz à l'intérieur du four solaire,
- des moyens tels qu'une vis-sans-fin pour faire progresser les substrats et les particules à l'intérieur du four solaire.

L) Dans certains modes de réalisation, une partie du réacteur jouera le rôle de four solaire tubulaire, notamment les parties sans échangeur en fin de réacteur, qui sera isolée au moyen de tubes transparents sous vide et sur lesquels la lumière solaire sera concentrée, formant un four solaire intégré au réacteur, et comprendra des moyens pour l'injection des gaz ou plasma. Cette partie de réacteur permettra de vaporiser les substrats en gaz afin de les séparer des particules catalytiques au moment de la sortie.

La présente invention concerne également :
1) Un procédé Fischer-Tropsch pour la synthèse d'oléfines, de paraffines, d'alcools et/ou d'eau, caractérisé en ce qu'il comprend les étapes consistant à faire circuler dans un tube réacteur (1) une phase particulaire comportant des particules de taille comprise entre 5nm et 5cm, et à soumettre à intervalles réguliers cette phase particulaire à au moins un plasma provenant d'au moins un gaz tel que du dihydrogène, du monoxyde de carbone et/ou leur mélange ;
2) Un procédé selon le paragraphe 1), caractérisé en ce que les particules sont choisies parmi : des particules de fer, des particules de carbure de silicium recouvertes ou intégrant du cobalt, des particules de fer recouvertes ou intégrant du cobalt, des particules de diamant, des particules de diamant creuses, des particules de diamant recouvertes ou intégrant du cobalt, des particules de diamant recouvertes ou intégrant du fer, des particules de carbure de silicium comprenant des particules de diamant, des particules de cuivre comprenant un mélange quelconque des éléments précités, des particules dont les cœurs sont en céramique tel que le carbure de silicium, des céramiques d'aluminium ou d'oxydes tels que les oxydes de silicium, d'aluminium, de titane, de zirconium, de magnésium, de silicium magnésium, de gallium, de césium ou encore de particules de carbone ou de tamis zéolithes, préférentiellement des particules avec des cœurs comprenant chacun une éponge en carbure de silicium et des nanoparticules de diamant préférentiellement creuses ;
3) Un procédé selon le paragraphe 2), caractérisé en ce que les cœurs ou les particules sont recouverts par des catalyseurs ioniques, des catalyseurs d'oxydes métalliques, tels qu'un mélange d'ions et/ou d'oxydes tels que des oxydes, correspondant au fer, au fer ferrique, au fer ferreux, au cuivre, au cuivre cuivrique, au cuivre cuivreux, au cérium, au potassium, au lanthane, au cobalt, au calcium, au zinc, à l'aluminium, au fluor, au magnésium , au manganèse, au nickel, au ruthénium, au rubidium, et/ou aux métaux de groupe I (alcalin, Li, Na, Rb, Cs, Fr) et/ou du groupe II (alcalins terreux Be, Mg, Ca, Sr, Ba, Ra) ;
4) Un procédé selon l'un quelconque des paragraphes précédents, caractérisé en ce que le plasma est d'origine micro-ondes (5), inductifs (13), arcs électriques (8, 9, 10, 11), arcs électriques hors équilibre, ou d'une combinaison quelconque d'origine micro-ondes, inductifs, arcs électriques et arcs électriques hors équilibre.

L'invention concerne également :
5) Un dispositif de mise en œuvre du procédé selon l'un des paragraphes 1) à 4), caractérisé en ce qu'il comprend un tube réacteur (1) en métal ou en céramique, tel qu'en alumine, AlTi, acier, titane, nickel, cuivre, cobalt, acier réfractaire, et zirconium, des moyens (2) pour faire avancer les particules dans le tube réacteur, et des moyens (5, 8, 13) pour générer un plasma dans le tube réacteur ;
6) Un dispositif selon le paragraphe 5), caractérisé en ce que les moyens pour faire avancer les particules dans le tube réacteur comportent une vis-sans-fin (3) ou une hélice ;
7) Un dispositif selon le paragraphe 6), caractérisé en ce qu'il comprend au moins un magnétron (5) de génération de micro-ondes, ce magnétron étant relié à un guide d'ondes (7) qui est traversé par le tube réacteur (1) qui est réalisé en matériau transparent aux micro-ondes et qui a un diamètre égal à λ/4 ou λ/2, où λ représente la longueur d'onde des micro-ondes, les micro-ondes se propageant dans le guide d'ondes étant destinées à traverser le tube réacteur et à interagir avec le gaz circulant dans le tube pour former le plasma ;
8) Un dispositif selon le paragraphe 6) ou 7), caractérisé en ce qu'il comprend un solénoïde (13) entourant le tube réacteur (14) qui est réalisé dans un matériau perméable aux champs électromagnétiques et dans lequel circule le gaz, le solénoïde étant destiné à être parcouru par un courant alternatif haute fréquence pour entraîner par induction la formation du plasma dans le gaz traversant le tube réacteur ;
9) Un dispositif selon l'un quelconque des paragraphes 6) à 8), caractérisé en ce que des électrodes (8) sous tension capables d'initier un plasma sont disposées à une entrée du tube réacteur et sont destinées à former des arcs électriques hors équilibre sous l'action de la forme des électrodes et de la circulation du gaz dans le tube ;
10) Un dispositif selon l'un quelconque des paragraphes 6 à 9, caractérisé en ce que l'isolement des atmosphères intérieure et extérieure du tube réacteur est réalisé par des systèmes (20,23) comprenant au moins deux cylindres coaxiaux emboîtés tournant en sens inverse dans une chambre cylindrique (24), chaque cylindre comprenant au moins une cavité (21, 23) dont l'atmosphère peut être vidée sans que l'atmosphère de la cavité de l'autre cylindre soit vidée ;
11) Un dispositif selon l'un quelconque des paragraphes 6) à 10), caractérisé en ce qu'il comprend un four solaire permettant de chauffer les particules, ce four solaire comprenant :
   - au moins un tuyau métallique fermé à ses extrémités par des moyens pour faire pénétrer et sortir les particules catalytiques et des substrats sans contamination atmosphérique extérieure et sans échappement du gaz intérieur,
   - au moins un moyen pour concentrer la lumière solaire à la surface du four,
   - au moins un moyen optiquement transparent pour isoler thermiquement le four solaire du milieu extérieur, notamment par des systèmes de tuyaux transparents sous vide et/ou de confinement par flux gazeux,
   - au moins un moyen pour injecter des micro-ondes combinées éventuellement avec des infrarouges et des plasmas, à l'intérieur du four afin de les faire réagir avec les substrats, par exemple pour les craquer ou pour régénérer les particules catalytiques,
   - au moins un moyen pour injecter au moins un gaz notamment du CO2, CO ou 02 ou des plasmas gazeux de ces gaz à l'intérieur du four solaire, et
   - au moins un moyen, tel qu'une vis-sans-fin, pour faire progresser les substrats et les particules à l'intérieur du four solaire.

### LEGENDES DE L'ENSEMBLE DES FIGURES

1) tuyau / tube réacteur
2) système d'hélice ou de vis-sans-fin
3) schéma représentatif d'hélice ou de vis-sans-fin
4) racloir souple ou un système de balais métalliques sur hélice ou de vis-sans-fin
5) magnétron
6) tube transparent pour les micro-ondes tel que le quartz
7) guide d'ondes
8) électrodes sous tension disposées à l'entrée du cylindre transparent
9) électrodes divergentes
10) tripode de trois électrodes disposées à 120° les unes des autres et portées à un même potentiel
11) pale de l'hélice à trois pales disposées à 120° , telles que chaque pale constitue une électrode
12) bornes d'un connecteur tournant
13) solénoïde
14) le tube en quartz ou en carbure de silicium ou tout autre céramique entourée par solénoïde
15) tube incluant le tube de quartz et solénoïde
16) échangeur incluant le réacteur
17) arrivée fluide caloriporteur
18) sortie fluide caloriporteur
19) entrées pour les torches à plasma
   Eq1) M : catalyseurs, initiation
   Eq2 -Eq3) interaction d'hydrogène dans les espèces carbonées
   Eq4-Eq5) croissance des chaînes
20) cylindre tournant intérieur
21) entrée cavité cylindre intérieur
22) pores disposés au fond de la cavité du cylindre intérieur
23) ouverture du cylindre extérieur de même taille que l'ouverture de la cavité du cylindre intérieur
24) chambre cylindrique
25) ouverture de la chambre cylindrique
26) bosselage muni de pores de la chambre cylindrique
27) cyclone de chargement
28) entrée cyclone air plus particules
29) évacuation air cyclone
30) cyclone à double entrée longitudinale et tangentielle
31) entrée longitudinale pour les substrats et particules
32) entrée tangentielle des gaz
33) chambre cylindrique de collection
34) pales inclinées à entrée longitudinale du cyclone
35) tuyau de récupération des gaz remontant dans le cyclone
36) piquage situé en fin du tuyau réacteur
37) sortie du tuyau réacteur

## Revendications

1. Procédé Fischer-Tropsch pour la synthèse d'oléfines, de paraffines, d'alcools et/ou d'eau, **caractérisé en ce qu'**il consiste à activer des gaz de synthèse, tels que du dihydrogène, du monoxyde de carbone, et/ou leur mélange, en un plasma, puis à soumettre aux gaz activés, à intervalles réguliers, une phase particulaire, éventuellement catalytique, comportant des particules de taille comprise entre 5nm et 5cm, l'application alternative du ou des gaz activés sur les particules et donc l'action successive des gaz sur les particules permettant de contrôler la croissance des synthèses, étant obtenue par la circulation des particules dans un réacteur tubulaire (1), tel que des entrées (9) de gaz activé soient régulièrement disposées le long du réacteur.

2. Procédé selon la revendication 1, **caractérisé en ce que** chaque gaz de synthèse, dihydrogène, monoxyde de carbone, dihydrogène, éventuellement activé, est appliqué alternativement sur la phase particulaire.

3. Procédé selon la revendication 1, **caractérisé en ce que** des mélanges de gaz de synthèse, tels que du monoxyde de carbone et du dihydrogène, avec des proportions variables de chaque gaz, éventuellement complété par des gaz additifs plasmogènes, tels que argon, hélium, azote, CO2, sont appliqués alternativement sur la phase particulaire.

4. Procédé selon l'une des revendications 1 à 3, **caractérisé en ce que** les particules sont choisies parmi : des particules de fer, des particules de carbure de silicium recouvertes ou intégrant du cobalt, des particules de fer recouvertes ou intégrant du cobalt, des particules de diamant, des particules de diamant creuses, des particules de diamant recouvertes ou intégrant du cobalt, des particules de diamant recouvertes ou intégrant du fer, des particules de carbure de silicium comprenant des particules de diamant, des particules de cuivre comprenant un mélange quelconque des éléments précités, des particules dont les cœurs sont en céramique tel que le carbure de silicium, des céramiques d'aluminium ou d'oxydes tels que les oxydes de silicium, d'aluminium, de titane, de zirconium, de magnésium, de silicium magnésium, de gallium, de césium ou encore de particules de carbone ou de tamis zéolithes, préférentiellement des particules avec des cœurs comprenant chacun une éponge en carbure de silicium et des nanoparticules de diamant préférentiellement creuses.

5. Procédé selon la revendication 4, **caractérisé en ce que** les cœurs ou les particules sont recouverts par des catalyseurs ioniques, des catalyseurs d'oxydes métalliques, tels qu'un mélange d'ions et/ou d'oxydes tels que des oxydes, correspondant au fer, au fer ferrique, au fer ferreux, au cuivre, au cuivre cuivrique, au cuivre cuivreux, au cérium, au potassium, au lanthane, au cobalt, au calcium, au zinc, à l'aluminium, au fluor, au magnésium , au manganèse, au nickel, au ruthénium, au rubidium, et/ou aux métaux de groupe I (alcalin, Li, Na, Rb, Cs, Fr) et/ou du groupe II (alcalins terreux Be, Mg, Ca, Sr, Ba, Ra).

6. Procédé selon l'une quelconque des revendications précédentes, caractérisé en ce l'activation des gaz en un plasma est d'origine micro-ondes (5), inductifs (13), arcs électriques (8, 9, 10, 11), arcs électriques hors équilibre, ou d'une combinaison quelconque d'origine micro-ondes, inductifs, arcs électriques et arcs électriques hors équilibre.

7. Dispositif de mise en œuvre du procédé selon l'une des revendications précédentes, **caractérisé en ce qu'**il comprend un tube réacteur (1) en métal ou en céramique, par exemple sans être exhaustif alumine, carbure de silicium, nitrure, AlTi, acier, titane, nickel, cuivre, cobalt, acier réfractaire, et zirconium, tantale, niobium, des moyens (2) pour faire avancer les particules dans le tube réacteur, et des moyens (5, 8, 13) pour injecter, dans le tube réacteur, un plasma représentant un gaz ou un mélange de gaz activés, des entrées (9) de gaz activé étant disposées de manière régulière le long dudit réacteur.

8. Dispositif selon la revendication 7, **caractérisé en ce que** les moyens pour faire avancer les particules dans le tube réacteur comportent une vis-sans-fin (3) ou une hélice.

9. Dispositif selon la revendication 7 ou 8, **caractérisé en ce qu'**il comprend au moins un magnétron (5) de génération de micro-ondes, ce magnétron étant relié à un guide d'ondes (7) qui est traversé par le tube réacteur (1) qui est réalisé en matériau transparent aux micro-ondes et qui a un diamètre égal à λ/4 ou λ/2, où λ représente la longueur d'onde des micro-ondes, les micro-ondes se propageant dans le guide d'ondes étant destinées à traverser le tube réacteur et à interagir avec le gaz circulant dans le tube pour former le plasma.

10. Dispositif selon l'une des revendications 7 à 9, **caractérisé en ce qu'**il comprend un solénoïde (13) entourant le tube réacteur (14) qui est réalisé dans un matériau perméable aux champs électromagnétiques et dans lequel circule le gaz, le solénoïde étant destiné à être parcouru par un courant alternatif haute fréquence pour entraîner par induction la formation du plasma dans le gaz traversant le tube réacteur.

11. Dispositif selon l'une quelconque des revendications 7 à 10, **caractérisé en ce que** des électrodes (8) sous tension capables d'initier un plasma sont disposées à une entrée du tube réacteur et sont destinées à former des arcs électriques hors équilibre sous l'action de la forme des électrodes et de la circulation du gaz dans le tube.

12. Dispositif selon l'une quelconque des revendications 7 à 11, **caractérisé en ce que** l'isolement des atmosphères intérieure et extérieure du tube réacteur lors du chargement et du déchargement des substrats du réacteur est réalisé par des systèmes (20, 23) de chargement et de déchargement des substrats, comprenant au moins deux cylindres coaxiaux emboîtés tournant en sens inverse dans une chambre cylindrique (24), le cylindre interne comprend une cavité munie d'une ouverture de pores au fond de la cavité, le cylindre externe comprend une ouverture unique similaire à celle du cylindre interne, (21, 23) tel que en tournant en sens inverse, les deux cylindres décrivent un cycle à quatre temps : a) chargement, les ouvertures des deux cylindres sont alignées permettant l'entrée de substrats, b) vidage de l'atmosphère de chargement, après ¼ de tour des deux cylindres en sens inverse les pores du cylindre interne sont alignées avec l'ouverture du cylindre externe, permettant de vider au travers de filtres l'atmosphère de la cavité du cylindre interne provenant de l'étape de chargement, c) déchargement, après ½ tour des deux cylindres en sens inverse les ouvertures des deux cylindres sont alignées, permettant de vider les substrats, d) après ¾ de tour des deux cylindres en sens inverse la petite ouverture du cylindre interne est alignée à la grand ouverture du cylindre externe, permettant de vider au travers de filtres l'atmosphère de la cavité du cylindre interne provenant de l'étape de déchargement.

13. Dispositif selon l'une quelconque des revendications 7 à 12, **caractérisé en ce qu'**il comprend après les sections d'application des gaz activés, un four solaire permettant de chauffer les particules, ce four solaire comprenant :
- au moins un tuyau métallique fermé à ses extrémités par des moyens pour faire pénétrer et sortir les particules catalytiques et des substrats sans contamination atmosphérique extérieure et sans échappement du gaz intérieur,
- au moins un moyen pour concentrer la lumière solaire à la surface du four,
- au moins un moyen optiquement transparent pour isoler thermiquement le four solaire du milieu extérieur, notamment par des systèmes de tuyaux transparents sous vide et/ou de confinement par flux gazeux,
- au moins un moyen pour injecter des micro-ondes combinées éventuellement avec des infrarouges et des plasmas, à l'intérieur du four afin de les faire réagir avec les substrats, par exemple pour les craquer ou pour régénérer les particules catalytiques,
- au moins un moyen pour injecter au moins un gaz notamment du CO2, CO ou 02 ou des plasmas gazeux de ces gaz à l'intérieur du four solaire, et
- au moins un moyen, tel qu'une vis-sans-fin, pour faire progresser les substrats et les particules à l'intérieur du four solaire.

## Patentansprüche

1. Fischer-Tropsch-Verfahren für die Synthese von Olefinen, Paraffinen, Alkoholen und/oder Wasser, **dadurch gekennzeichnet, dass** es darin besteht, Synthesegase, wie Dihydrogen, Kohlenstoffmonoxid und/oder deren Gemisch, zu einem Plasma zu aktivieren, anschließend den aktivierten Gasen in regelmäßigen Abständen eine partikuläre, gegebenenfalls katalytische Phase, die Partikel der Größe zwischen 5 nm und 5 cm umfasst, zu unterwerfen, wobei die abwechselnde Anwendung des oder der aktivierten Gase auf die Partikel und folglich die nachfolgende Wirkung der Gase auf die Partikel ermöglicht, das Wachstum der Synthesen, die durch die Zirkulation der Partikel in einem röhrenförmigen Reaktor (1), wie Eingänge (9) von aktiviertem Gas, die regelmäßig entlang des Reaktors angeordnet sind, erhalten werden, zu steuern.

2. Verfahren nach Anspruch 1, **dadurch gekennzeichnet, dass** jedes Synthesegas, Dihydrogen, Kohlenstoffmonoxid, Dihydrogen, gegebenenfalls aktiviert, abwechselnd auf die partikuläre Phase angewendet wird.

3. Verfahren nach Anspruch 1, **dadurch gekennzeichnet, dass** die Gemische aus Synthesegasen, wie Kohlenstoffmonoxid und Dihydrogen, mit variablen Proportionen von jedem Gas, gegebenenfalls mit plasmogenen Zusatzgasen, wie Argon, Helium, Stickstoff, CO2 ergänzt, abwechselnd auf die partikuläre Phase angewendet werden.

4. Verfahren nach einem der Ansprüche 1 bis 3, **dadurch gekennzeichnet, dass** die Partikel ausgewählt sind aus: Eisenpartikel, Siliziumkarbidpartikel, die mit Kobalt bedeckt sind oder dieses einbinden, Eisenpartikel, die mit Kobalt bedeckt sind oder dieses einbinden, Diamantpartikel, hohle Diamantpartikel, Diamantpartikel, die mit Kobalt bedeckt sind oder dieses einbinden, Diamantpartikel, die mit Eisen bedeckt sind oder dieses einbinden, Siliziumkarbidpartikel, die Diamantpartikel umfassen, Kupferpartikel, die ein beliebiges Gemisch der obengenannten Elemente umfassen, Partikel, deren Kerne aus Keramik, wie Siliziumkarbid, Aluminiumkeramiken, oder Oxiden sind, wie Silizium-, Aluminium-, Titan-, Zirkonium-, Magnesium-, Siliziummagnesium-, Gallium-, Cäsiumoxide, oder auch Kohlenstoffstoffpartikel oder Zeolithsiebe, vorzugsweise Partikel mit Kernen, die jeweils einen Schwamm aus Siliziumkarbid und vorzugsweise hohle Diamantnanopartikel umfassen.

5. Verfahren nach Anspruch 4, **dadurch gekennzeichnet, dass** die Kerne oder die Partikel mit ionischen Katalysatoren, Metalloxidkatalysatoren, wie einem Gemisch aus Ionen und/oder Oxiden, wie Oxiden, die Eisen, Eisen(III), Eisen(II), Kupfer, Kupfer(II), Kupfer(I), Cer, Kalium, Lanthan, Kobalt, Kalzium, Zink, Aluminium, Fluor, Magnesium, Mangan, Nickel, Ruthenium, Rubidium und/oder Metallen der Gruppe I (Alkali, Li, Na, Rb, Cs, Fr) und/oder der Gruppe II (Erdalkalis Be, Mg, Ca, Sr, Ba, Ra) entsprechen, bedeckt sind.

6. Verfahren nach einem der vorstehenden Ansprüche, **dadurch gekennzeichnet, dass** die Aktivierung der Gase zu einem Plasma aus Mikrowellen (5), induktiv (13), Lichtbögen (8, 9, 10, 11), Lichtbögen außerhalb des Gleichgewichts oder einer beliebigen aus Mikrowellen, induktiven, Lichtbögen und Lichtbögen außerhalb des Gleichgewichts stammenden Kombination stammt.

7. Vorrichtung zum Einsatz des Verfahrens nach einem der vorstehenden Ansprüche, **dadurch gekennzeichnet, dass** sie eine Reaktorröhre (1) aus Metall oder aus Keramik, beispielsweise, ohne erschöpfend zu sein, Aluminiumoxid, Siliziumkarbid, Nitrid, AlTi, Stahl, Titan, Nickel, Kupfer, Kobalt, hitzebeständigem Stahl, und Zirkonium, Tantal, Niob, Mittel (2), um die Partikel in der Reaktorröhre vorwärtszubewegen, und Mittel (5, 8, 13), um ein Plasma in die Reaktorröhre zu injizieren, das ein Gas oder ein Gemisch aus aktivierten Gasen darstellt, Eingänge (9) von aktiviertem Gas, die auf regelmäßige Weise entlang des Reaktors angeordnet sind, umfasst.

8. Vorrichtung nach Anspruch 7, **dadurch gekennzeichnet, dass** die Mittel, um die Partikel in der Reaktorröhre vorwärtszubewegen, eine Endlosschraube (3) oder eine Helix umfassen.

9. Vorrichtung nach Anspruch 7 oder 8, **dadurch gekennzeichnet, dass** sie mindestens ein Magnetron (5) zur Erzeugung von Mikrowellen umfasst, wobei dieses Magnetron mit einer Wellenführung (7) verbunden ist, die von der Reaktorröhre (1) durchquert wird, die aus einem für Mikrowellen transparenten Material ausgeführt ist und die einen Durchmesser gleich λ/4 oder λ/2 aufweist, wobei λ die Wellenlänge der Mikrowellen darstellt, wobei die Mikrowellen, die sich in der Wellenführung ausbreiten, dazu vorgesehen sind, die Reaktorröhre zu durchqueren und mit dem Gas, das in der Röhre zirkuliert, zu interagieren, um das Plasma zu bilden.

10. Vorrichtung nach einem der Ansprüche 7 bis 9, **dadurch gekennzeichnet, dass** sie ein Solenoid (13) umfasst, das die Reaktorröhre (14) umgibt, die aus einem für die Elektromagnetfelder durchlässigen Material ausgeführt ist und in dem das Gas zirkuliert, wobei das Solenoid dazu vorgesehen ist, von einem Hochfrequenzwechselstrom durchlaufen zu werden, um die Plasmabildung in dem Gas, das die Reaktorröhre durchquert, durch Induktion anzutreiben.

11. Vorrichtung nach einem der Ansprüche 7 bis 10, **dadurch gekennzeichnet, dass** Elektroden (8) unter Spannung, die imstande sind, ein Plasma einzuleiten, an einem Eingang der Reaktorröhre angeordnet sind und dazu vorgesehen sind, unter der Wirkung der Form der Elektroden und der Zirkulation des Gases in der Röhre Lichtbögen außerhalb des Gleichgewichts zu bilden.

12. Vorrichtung nach einem der Ansprüche 7 bis 11, **dadurch gekennzeichnet, dass** die Isolierung der internen und externen Atmosphäre der Reaktorröhre bei der Beschickung und Entladung der Substrate des Reaktors durch Systeme (20, 23) zur Beschickung und Entladung der Substrate ausgeführt wird, die mindestens zwei ineinander verschachtelte koaxiale Zylinder umfassen, die sich in einer zylindrischen Kammer (24) in entgegengesetzter Richtung drehen, wobei der innere Zylinder einen Hohlraum umfasst, der mit einer Porenöffnung am Boden des Hohlraums ausgestattet ist, wobei der äußere Zylinder eine einzige Öffnung umfasst, die jener des inneren Zylinders (21, 23) ähnlich ist, sodass beim Drehen in entgegengesetzter Richtung die zwei Zylinder einen Viertaktzyklus beschreiben: a) Beschickung, die Öffnungen der zwei Zylinder sind ausgerichtet, was den Eintritt der Substrate ermöglicht, b) Ablass der Beschickungsatmosphäre, nach ¼ Umdrehung der zwei Zylinder in entgegengesetzter Richtung sind die Poren des inneren Zylinders mit der Öffnung des äußeren Zylinders ausgerichtet, was ein Ablassen der aus dem Beschickungsschritt stammenden Atmosphäre des Hohlraums des inneren Zylinders durch Filter hindurch ermöglicht, c) Entladung, nach ½ Umdrehung der zwei Zylinder in entgegengesetzter Richtung sind die Öffnungen der zwei Zylinder ausgerichtet, was Ablassen der Substrate ermöglicht, d) nach % Umdrehung der zwei Zylinder in entgegengesetzter Richtung ist die kleine Öffnung des inneren Zylinders mit der großen Öffnung des äußeren Zylinders ausgerichtet, was Ablassen der aus dem Entladungsschritt herrührenden Atmosphäre des Hohlraums des inneren Zylinders durch Filter hindurch ermöglicht.

13. Vorrichtung nach einem der Ansprüche 7 bis 12, **dadurch gekennzeichnet, dass** sie nach den Abschnitten der Anwendung der aktivierten Gase einen Sonnenofen umfasst, der ein Erwärmen der Partikel ermöglicht, wobei der Sonnenofen umfasst:
- mindestens ein metallisches Rohr, das an seinen Enden durch Mittel verschlossen ist, um die katalytischen Partikel und Substrate ohne äußere atmosphärische Kontamination und ohne Entweichen des Innengases eindringen und heraustreten zu lassen,
- mindestens ein Mittel, um das Sonnenlicht an der Oberfläche des Ofens zu bündeln,
- mindestens ein optisch transparentes Mittel, um den Sonnenofen von der Außenumgebung thermisch zu isolieren, insbesondere durch Systeme unter Vakuum stehender transparenter Rohre und/oder der Eindämmung durch Gasströme,
- mindestens ein Mittel, um Mikrowellen, gegebenenfalls mit Infrarotwellen oder Plasmen kombiniert, in das Innere des Ofens zu injizieren, um sie mit den Substraten umzusetzen, beispielsweise, um sie zu cracken oder um die katalytischen Partikel zu regenerieren,
- mindestens ein Mittel, um mindestens ein Gas, insbesondere CO2, CO oder O2 oder gasförmige Plasmen dieser Gase in das Innere des Sonnenofens zu injizieren, und
- mindestens ein Mittel, wie eine Endlosschraube, um die Substrate und die Partikel im Inneren des Sonnenofens vorwärtszubewegen.

## Claims

1. A Fischer-Tropsch method for the synthesis of olefins, paraffins, alcohols and/or water, **characterised in that** it consists in activating synthesis gases, such as dihydrogen, carbon monoxide, and/or their mixture, in a plasma, then subjecting to the activated gases, at regular intervals, a particulate phase, possibly catalytic, comprising particles of size between 5nm and 5cm, the alternate application of the activated gas(es) to the particles and thus the successive action of the gases on the particles making it possible to control the growth of the syntheses, being obtained by circulating the particles in a tubular reactor (1), such that inlets (9) for activated gas are regularly arranged along the reactor.

2. The method according to claim 1, **characterized in that** each synthesis gas, dihydrogen, carbon monoxide, dihydrogen, possibly activated, is applied alternately to the particulate phase.

3. The method according to claim 1, **characterized in that** mixtures of synthesis gases, such as carbon monoxide and dihydrogen, with varying proportions of each gas, optionally supplemented by plasma-forming additive gases, such as argon, helium, nitrogen, CO2, are alternately applied to the particulate phase.

4. The method according to any of claims 1 to 3, **characterised in that** the particles are selected from : iron particles, silicon carbide particles coated with or incorporating cobalt, iron particles coated with or incorporating cobalt, diamond particles, hollow diamond particles, diamond particles coated with or incorporating cobalt, diamond particles coated with or incorporating iron, silicon carbide particles comprising diamond particles, copper particles comprising any mixture of the above, particles whose cores are made of ceramic such as silicon carbide, aluminium ceramics or oxides such as silicon, aluminium, titanium, zirconium, magnesium, silicon magnesium, gallium, caesium oxides or carbon particles or zeolite sieves, preferably particles with cores each comprising a silicon carbide sponge and preferably hollow diamond nanoparticles.

5. The method according to claim 4, **characterized in that** the cores or particles are coated with ionic catalysts, metal oxide catalysts, such as a mixture of ions and/or oxides, such as oxides, corresponding to iron, with ferric iron, ferrous iron, copper, cupric copper, cuprous copper, cerium, potassium, lanthanum, cobalt, calcium, zinc, aluminium, fluorine, magnesium, manganese, nickel, ruthenium, rubidium, and/or group I metals (alkali, Li, Na, Rb, Cs, Fr) and/or group II metals (alkaline earths Be, Mg, Ca, Sr, Ba, Ra).

6. The method according to any one of the preceding claims, **characterised in that** the activation of the gases into a plasma is of microwave (5), inductive (13), electric arc (8, 9, 10, 11), non-equilibrium electric arc origin, or of any combination of microwave, inductive, electric arc and non-equilibrium electric arc origin.

7. A device for carrying out the process according to any of the preceding claims, **characterised in that** it comprises a reactor tube (1) made of metal or ceramic, for example but not exhaustively alumina, silicon carbide, nitride, AITi, steel, titanium, nickel, copper, cobalt, refractory steel, and zirconium, tantalum, niobium, means (2) for advancing the particles into the reactor tube, and means (5, 8, 13) for injecting into the reactor tube a plasma representing an activated gas or gas mixture, inlets (9) for activated gas being arranged regularly along said reactor.

8. The device according to claim 7, **characterized in that** the means for advancing the particles in the reactor tube comprise a worm screw (3) or a propeller.

9. The device according to claim 7 or 8, **characterized in that** it comprises at least one microwave generating magnetron (5), this magnetron being connected to a waveguide (7) through which the reactor tube (1) passes, which is made of a material transparent to microwaves and which has a diameter equal to λ/4 or λ/2, where λ represents the wavelength of the microwaves, the microwaves propagating in the waveguide being intended to pass through the reactor tube and to interact with the gas circulating in the tube in order to form the plasma.

10. The device according to one of claims 7 to 9, **characterized in that** it comprises a solenoid (13) surrounding the reactor tube (14) which is made of a material permeable to electromagnetic fields and in which the gas flows, the solenoid being intended to have a high-frequency alternating current flowing through it in order to induce the formation of the plasma in the gas passing through the reactor tube.

11. The device according to any one of claims 7 to 10, **characterised in that** electrodes (8) under voltage capable of initiating a plasma are arranged at an inlet of the reactor tube and are intended to form non-equilibrium electric arcs under the action of the shape of the electrodes and of the circulation of the gas in the tube.

12. The device according to any one of claims 7 to 11, **characterized in that** the isolation of the internal and external atmospheres of the reactor tube during the loading and unloading of the substrates from the reactor is achieved by systems (20, 23) for loading and unloading the substrates, comprising at least two nested coaxial cylinders rotating in opposite directions in a cylindrical chamber (24), the inner cylinder comprises a cavity provided with a pore opening at the bottom of the cavity, the outer cylinder comprises a single opening similar to that of the inner cylinder, (21, 23) such that when rotating in opposite directions, the two cylinders describe a four-stage cycle:
a) loading, the openings of the two cylinders are aligned allowing the entry of substrates,
b) emptying the loading atmosphere, after 1/4 turn of the two cylinders in opposite direction the pores of the inner cylinder are aligned with the opening of the outer cylinder, allowing the atmosphere in the cavity of the inner cylinder from the loading step to be emptied through filters,
c) unloading, after 1/2 turn of the two cylinders in opposite direction the openings of the two cylinders are aligned, allowing to empty the substrates,
d) after 3/4 turn of the two cylinders in opposite direction the small opening of the inner cylinder is aligned with the large opening of the outer cylinder, allowing the atmosphere of the cavity of the inner cylinder from the unloading step to be emptied through filters.

13. The device according to any one of claims 7 to 12, **characterised in that** it comprises, after the activated gas application sections, a solar furnace allowing the particles to be heated, this solar furnace comprising:
- at least one metal pipe closed at its ends by means to allow the catalytic particles and substrates to enter and exit without external atmospheric contamination and without exhaust of the internal gas,
- at least one means for concentrating sunlight on the surface of the furnace,
- at least one optically transparent means for thermally isolating the solar furnace from the outside environment, in particular, by transparent vacuum pipe systems and/or gas flow confinement,
- at least one means for injecting microwaves, possibly combined with infrared and plasmas, into the interior of the furnace to react with the substrates, for example to crack them or to regenerate the catalytic particles,
- at least one means for injecting at least one gas, in particular CO2, CO or O2 or gaseous plasmas of these gases into the interior of the solar furnace, and
- at least one means, such as a worm screw, for advancing the substrates and particles into the interior of the solar furnace.
